# EUROPÄISCHE PATENTSCHRIFT

(11) **EP 1 072 466 B1**
(45) Veröffentlichungstag und Bekanntmachung des Hinweises auf die Patenterteilung: **01.10.2003**
(21) Anmeldenummer: 00250221.9
(22) Anmeldetag: 06.07.2000
(51) Int. Cl.: B60N 3/02

(54) **Haltegriff für Innenraum eines Fahrzeugs, insbesondere Dachhaltegriff**
Handgrip for the interior of a vehicle, particularly roof handgrip
Poignée de maintien pour l'habitacle de véhicules, en particulier poignée fixée au toit

(30) Priorität: 28.07.1999 DE 19935346
(43) Veröffentlichungstag der Anmeldung: 31.01.2001
(73) Patentinhaber: Volkswagen AG, 38436 Wolfsburg (DE)
(72) Erfinder: Hayn, Hans-Joachim, 38448 Wolfsburg (DE); Karg, Horst, 38442 Wolfsburg (DE)

(56) Entgegenhaltungen:
- EP-A- 0 398 106
- DE-A- 3 828 032
- DE-A- 19 731 325
- DE-C- 4 002 963
- DE-U- 29 804 105
- US-A- 4 895 403

## Beschreibung

Die Erfindung betrifft einen Haltegriff für den Innenraum eines Fahrzeugs, insbesondere einen Dachhaltegriff nach dem Oberbegriff des Anspruchs 1.

Eine bekannter, gattungsgemäßer Haltegriff als Dachhaltegriff (DE 38 28 032 A1 ) ist aus einer in einer Aufnahmeöffnung eines Wandteils versenkten Nichtgebrauchslage in eine vom Wandteil abstehende Gebrauchslage durch ein Antriebsmittel verlagerbar. Der Haltegriff ist dabei von der Nichtgebrauchslage in die Gebrauchslage federvorgespannt, wobei über einen Auslöseknopf eine Ausfahrfeder betätigbar ist. Die Ausfahrbewegung ist mittels Dämpfungseinrichtungen verlangsamt und gedämpft. Eine Rückverlagerung von der Gebrauchslage in die Nichtgebrauchslage muß von Hand durchgeführt werden, wobei die Ausfahrfeder wieder gespannt und der Auslöseknopf wieder in Bereitschaft gebracht wird.

Mit einer solchen Anordnung wird ein optisch günstiges Erscheinungsbild durch die versenkte Anordnung des Haltegriffs in der Nichtgebrauchsstellung geschaffen und zudem wird der Bedienkomfort durch die selbsttätige Ausfahrbewegung erhöht. Nachteilig dabei ist jedoch die zwangsläufig erforderliche, handbetätigte Rückverlagerung durch einen Griffbenutzer, die einerseits unbequem ist und andererseits eine bewußte Handlung erfordert. Wenn der Haltegriff nach der Benutzung nicht zurückverlagert wird und im Fahrbetrieb in den Fahrzeuginnenraum vorsteht, kann dies je nach den Gegebenheiten in einem Crashfall ein Sicherheitsrisiko sein.

Weiter sind unterschiedliche Ausführungen von Dachhaltegriffen bekannt, die von einer Nichtgebrauchsstellung aus einer Griffmulde heraus in eine Gebrauchsstellung gegen eine rückstellende Federkraft schwenkbar oder verschiebbar sind (DE 296 12 550 U1 ; DE 196 08 275 A1: DE 196 38 007 A1). Die Griffmulde muß hierbei so ausgebildet sein, daß der Haltegriff auch in seiner Nichtgebrauchsstellung noch ergriffen werden kann. Somit ist ein glatt durchgehendes Erscheinungsbild mit einem voll versenkten Haltegriff bei solchen Ausführungen nicht möglich. Zudem ist der Haltegriff gegen die Kraft einer Rückstellfeder in seine Benutzungslage zu überführen, was den Bedienkomfort verringert. Ein Griff für Türen durch Antriebmotor geöffnet ist in DE 298 04 105 U beschrieben.

Aufgabe der Erfindung ist es, einen Haltegriff für den Innenraum eines Fahrzeugs, insbesondere einen Dachhaltegriff zu schaffen, der ein gutes Erscheinungsbild in der Nichtbenutzungslage und einen hohen Bedienkomfort aufweist.

Diese Aufgabe wird mit den Merkmalen des Anspruchs 1 gelöst.

Gemäß Anspruch 1 ist durch Antippen des zugänglichen Sichtbereichs des Haltegriffs in dessen Nichtgebrauchsstellung eine Tippansteuerung aktivierbar, die mit dem wenigstens einen Antriebsmittel dergestalt gekoppelt ist, daß dieses den Haltegriff von der versenkten Nichtgebrauchslage in eine das Ergreifen des Haltegriffs erlaubende Bereitschaftslage verlagert.

Nach dem Ergreifen des Haltegriffs in dessen Bereitschaftslage durch einen Griffbenutzer wird durch diesen ein Zug ausgeübt, durch den der Haltegriff weiter, vorzugsweise mit einem geringen Verlagerungsweg in seine endgültige Abstütz- und Gebrauchsstellung verlagerbar ist. Durch diese Zugbewegung ist eine Zugansteuerung aktivierbar, die mit dem wenigstens einen Antriebsmittel dergestalt gekoppelt ist, daß dieses den Haltegriff wieder in die versenkte Nichtgebrauchsstellung zurückverlagert.

Damit wird sowohl die Ausfahrbewegung als auch die Rückstellbewegung des Haltegriffs automatisiert, wobei die erforderlichen Ansteuerungen in einem ergonomisch günstigen und logischen Bewegungsablauf für den Griffbenutzer eingebunden sind: wenn ein Insasse den Haltegriff benutzen will, so hat er dessen zugänglichen Sichtbereich in der versenkten Nichtgebrauchslage nur anzutippen, worauf dieser in die Bereitschaftsstellung selbsttätig ausfährt. Da der Insasse die Tippansteuerung betätigt hat um anschließend den Haltegriff zu benutzen, wird er diesen in der Bereitschaftsstellung auch ergreifen und sich daran durch einen Zug abstützen. Durch diese Zugbewegung wird dann weiter, ohne daß eine zusätzliche bewußte Handlung des Insassen erforderlich ist, die Zugansteuerung für eine selbsttätige Rückverlagerung des Haltegriffs in die versenkte Nichtgebrauchsstellung aktiviert. Alternativen für eine solche Rückverlagerungssteuerung werden weiter unten näher erläutert.

Für eine einfach herstellbare Ausführungsform wird vorgeschlagen, daß der Haltegriff als Bügelgriff ausgeführt ist, der mit seinen Bügelschenkeln entlang zugeordneten, im Wandteil angebrachten Führungen linear verschiebbar ist.

Für angenehm langsame und geräuscharme Bewegungen sollen an sich bekannte Dämpfungselemente verwendet werden.

In einer bevorzugten Ausführungsform soll die von den Antriebsmitteln aufbringbare Rückstellkraft für den Haltegriff klein gegenüber einer von einem Griffbenutzer aufbringbaren Zugkraft sein. Damit wird erreicht, daß, so lange ein Griffbenutzer den Griff mit einer gewissen vorgebbaren Zugkraft hält, die Rückstellkraft für eine tatsächliche Rückstellung nicht ausreicht, obwohl der Rückstellvorgang bereits über die Zugansteuerung aktiviert ist. Erst nach dem Loslassen des Griffes erfolgt dann eine selbsttätige Rückstellung. Zusätzlich oder alternativ kann auch vorgesehen sein, daß nach Betätigung der Zugansteuerung durch einen Griffbenutzer die Antriebsmittelzeit verzögert angesteuert werden, so daß innerhalb der Zeitverzögerung der Haltegriff bequem als Einstiegshilfe benützbar ist.

Um sicherzustellen, daß der Haltegriff in jedem Fall wieder in seine versenkte Nichtgebrauchslage zurückgeführt wird, auch dann, wenn nur die Tippansteuerung betätigt und der Haltegriff in der Bereitschaftsstellung nicht weiter in seiner Funktion benutzt wurde, wird eine zeitverzögerte Rückführung auch aus der Bereitschaftslage beansprucht.

Je nach den Gegebenheiten können als Antriebsmittel wenigstens ein elektrischer und/oder pneumatischer und/oder hydraulischer Antriebsmotor verwendet werden. Dabei können sowohl die Tippansteuerung als auch die Zugansteuerung als Taster oder Schalter für eine unmittelbare Ansteuerung des Antriebsmotors ausgebildet sein.

Alternativ kann als Antrieb auch ein Federantrieb verwendet werden, der dann eine Ausfahrfeder und eine Einfahrfeder oder ggf. eine umsteuerbare Feder umfaßt. Die erforderliche Energieaufladung des Federantriebs für die Automatikbetätigungen kann jeweils durch die Zugbewegung des Griffbenutzers von der Bereitschaftsstellung in die Gebrauchslage über die Zugmechanik erfolgen. Zudem können die Tippmechanik und die Zugmechanik über Rastelemente auf den Federantrieb einwirken und dabei jeweils eine Feder in der gewünschten Bewegungsrichtung freigeben und in der anderen Bewegungsrichtung blockieren.

Vorteilhaft lassen sich die vorstehenden Haltegriffanordnungen in einem Formhimmel eines Kraftfahrzeugs integrieren, wobei besonders platzsparende Anordnungen in Verbindung mit Kopfairbag-Anordnungen möglich sind.

Anhand einer Zeichnung wird die Erfindung näher erläutert.

Es zeigen:
- Fig. 1: eine schematische Darstellung eines Dachhaltegriffs in einer Nichtgebrauchslage,
- Fig. 2: eine schematische Darstellung des Dachhaltegriffs nach Fig. 1 in einer Bereitschaftslage sowie in einer Gebrauchslage, und
- Fig. 3: eine schematische Darstellung des Dachhaltegriffs nach Fig. 1 in Verbindung mit einer Rückstellbewegung in die Nichtgebrauchslage.

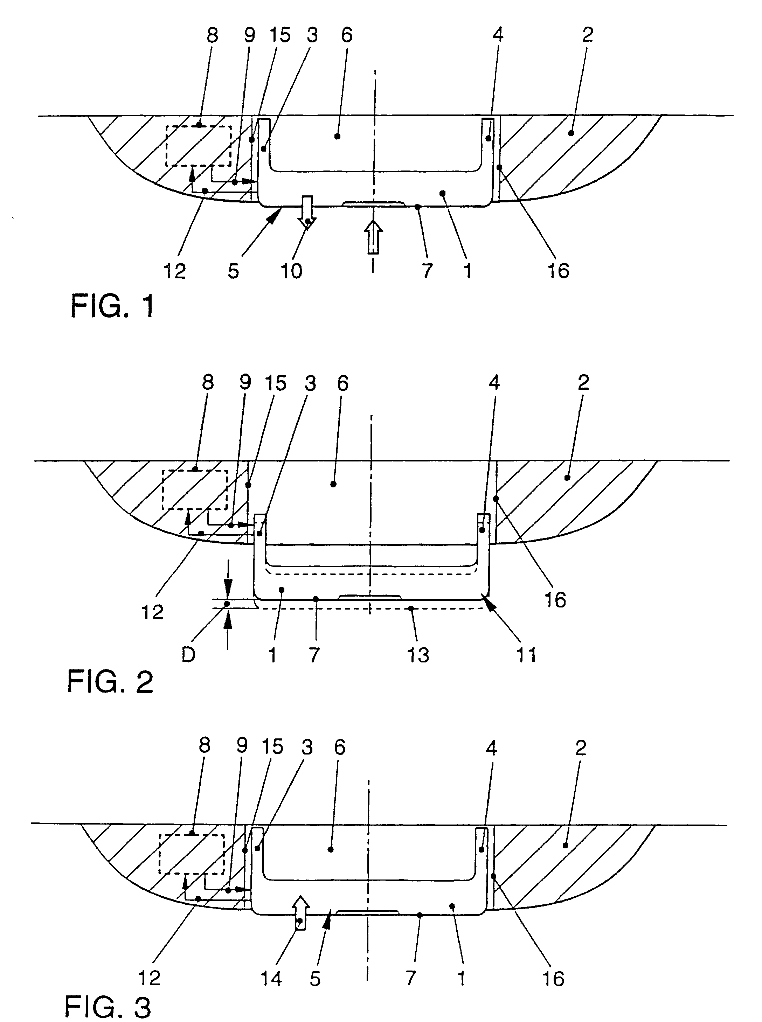

In Fig. 1 ist schematisch ein Dachhaltegriff 1 dargestellt, der in einen Formhimmel 2 eines Kraftfahrzeugs integriert ist.

Der Dachhaltegriff 1 ist als U-förmiger Bügelgriff ausgebildet, der Bügelschenkel 3, 4 aufweist und in der in der Fig. 1 dargestellten Nichtgebrauchslage 5 in einer Aufnahmeöffnung 6 des Formhimmels 2 versenkt ist. Diese Aufnahmeöffnung 6 ist in der Nichtgebrauchslage 5 durch einen Sichtbereich 7 des Dachhaltegriffs 1 bündig mit dem Randbereich der Aufnahmeöffnung 6 verschlossen.

Im Formhimmel 2 ist ferner ein hier lediglich strichliert und schematisch eingezeichneter Elektromotor 8 integriert, der über eine hier lediglich schematisch mit dem Pfeil 9 dargestellte mechanische Antriebsverbindung mit dem Dachhaltegriff 1 gekoppelt ist.

Durch das Antippen des Sichtbereichs 7 des Dachhaltegriffs 1 in der in der Fig. 1 dargestellten Nichtgebrauchslage 5, wie dies in der Fig. 1 durch den Pfeil 10 schematisch dargestellt ist, ist eine hier nicht dargestellte Tippansteuerung aktivierbar, die mit dem Elektromotor 8 dergestalt gekoppelt ist, daß dieser den Dachhaltegriff 1 von der in der Fig. 1 dargestellten versenkten Nichtgebrauchslage 5 in eine in der Fig. mit durchgezogenen Linien dargestellte, das Ergreifen des Dachhaltegriffs 1 erlaubende Bereitschaftslage 11 verlagert wird. Die Kopplung der Tippansteuerung mit dem Elektromotor 8 ist in den Fig. 1 bis 3 schematisch als Steuersignal 12 dargestellt.

Nach dem Ergreifen des Dachhaltegriffs 1 in dessen Bereitschaftslage 11 durch einen Griffbenutzer wird durch diesen ein Zug auf den Dachhaltegriff 1 ausgeübt, durch den der Dachhaltegriff 1, wie dies in der Fig. 2 strichliert dargestellt ist, weiter in seine endgültige Abstütz- und Gebrauchsstellung 13 verlagert, wodurch eine hier nicht dargestellte Zugansteuerung aktivierbar ist, die mit dem Elektromotor 8 dergestalt gekoppelt ist, daß dieses den Dachhaltegriff 1 wieder in die versenkte Nichtgebrauchslage 5 zurückverlagert, wie dies in der Fig. 3 schematisch durch den Pfeil 14 dargestellt ist. Der Zugweg für die Zugansteuerung ist in der Fig. 2 mit D dargestellt.

Das Zugsignal wird ebenfalls als Steuersignal 12 dem Elektromotor 8 zugeführt.

Während der Ausfahrbewegung bzw. Rückstellbewegung ist der Dachhaltegriff 1 über seine Bügelschenkel 3, 4 entlang entsprechend zugeordneten, im Formhimmel 2 angebrachten Führungen 15, 16 linear verschiebbar. Für eine gedämpfte Bewegung des Dachhaltegriffs 1 können entweder mit dem Dachhaltegriff 1 direkt verbundene oder mit dem Elektromotor 8 verbundene Dämpfungselemente, die hier allerdings nicht dargestellt sind, vorgesehen sein.

Alternativ zu dem Elektromotor 8 als Antriebsmittel können auch pneumatische und/oder hydraulische Antriebsmittel bereitgestellt werden. Die Tippansteuerung und/oder die Zugansteuerung für den Elektromotor 8 kann beispielsweise als Taster oder Schalter ausgebildet sein.

Alternativ kann als Antrieb auch ein Federantrieb verwendet werden, der dann eine Ausfahrfeder und eine Einfahrfeder oder ggf. eine umsteuerbare Feder umfaßt.

Die von dem Elektromotor 8 aufbringbare Rückstellkraft für den Dachhaltegriff soll klein gegenüber einer von einem Griffbenutzer aufbringbaren Zugkraft sein. Damit wird erreicht, daß ein Griffbenutzer den Dachhaltegriff 1 ungestört benutzen kann, d. h. daß die Rückstellkraft nicht ausreicht, obwohl der Rückstellvorgang als solches bereits über die Zugansteuerung aktiviert ist. Erst nach dem Loslassen des Griffs durch den Griffbenutzer erfolgt dann die selbsttätige Rückstellung.

### BEZUGSZEICHENLISTE

- 1: Dachhaltegriff
- 2: Formhimmel
- 3: Bügelschenkel
- 4: Bügelschenkel
- 5: Nichtgebrauchslage
- 6: Aufnahmeöffnung
- 7: Sichtbereich
- 8: Elektromotor
- 9: mechanische Antriebsverbindung
- 10: Pfeil
- 11: Bereitschaftslage
- 12: Steuersignal
- 13: Abstütz- und Gebrauchsstellung
- 14: Pfeil
- 15: Führung
- 16: Führung

- D: Zugweg

## Patentansprüche

1. Haltegriff (1) für den Innenraum eines Fahrzeugs, insbesondere Dachhaltegriff, der aus einer in einer Aufnahmeöffnung (6) eines Wandteils versenkten Nichtgebrauchslager (5), bei der die Aufnahmeöffnung (6) durch einen Sichtbereich (7) des Haltegriffs (1) bündig mit dem Randbereich der Aufnahmeöffnung (6) verschlossen ist, in eine vom Wandteil abstehende Gebrauchslage (13) durch wenigstens ein Antriebsmittel (8) verlagerbar und von der Gebrauchslage (13) in die Nichtgebrauchslage (5) trückverlagerbar ist,
wobei
durch Antippen des Sichtbereichs (7) des Haltegriffs (1) in dessen Nichtgebrauchsstellung (5) eine Tippansteuerung aktivierbar ist, die mit dem wenigstens einen Antriebsmittel (8) dergestalt gekoppelt ist, daß dieses den Haltegriff (1) von der versenkten Nichtgebrauchslage (5) in eine das Ergreifen des Haltegriffs (1) erlaubende Bereitschaftslage (11) verlagert, **dadurch gekennzeichnet, daß** nach dem Ergreifen des Haltegriffs (1) in dessen Bereitschaftslage (11) durch einen Griffbenutzer durch diesen ein Zug ausgeübt wird durch den der Haltegriff (1) weiter in seine endgültige Abstütz- und Gebrauchsstellung (13) verlagerbar ist, wobei dadurch eine Zugansteuerung aktivierbar ist, die mit dem wenigstens einen Antriebsmittel (8) dergestalt gekoppelt ist, daß dieses den Haltegriff (1) wieder in die versenkte Nichtgebrauchsstellung (5) zurückverlagert.

2. Haltegriff nach Anspruch 1, **dadurch gekennzeichnet, daß** der Haltegriff (1) ein Bügelgriff ist, der mit seinen Bügelschenkeln (3, 4) entlang zugeordneten, im Wandteil (2) angebrachten Führungen (15, 16) linear verschiebbar ist.

3. Haltegriff nach Anspruch 1 oder Anspruch 2, **dadurch gekennzeichnet, daß** für gedämpfte Bewegungen des Haltegriffs (1) mit diesem oder den Antriebsmitteln (8) verbundene Dämpfungselemente vorgesehen sind.

4. Haltegriff nach einem der Ansprüche 1 bis 3, **dadurch gekennzeichnet, daß die von** dem wenigstens einen Antriebsmittel (8) aufbringbare Rückstellkraft klein ist gegenüber einer von einem Griffbenutzer aufbringbaren Zugkraft.

5. Haltegriff nach einem der Ansprüche 1 bis 4, **dadurch gekennzeichnet, daß die** Aktivierung des wenigstens einen Antriebsmittels (8) für eine Rückstellung durch die Zugansteuerung für eine Rückverlagerung des Haltegriffs (1) zeitverzögert erfolgt.

6. Haltegriff nach einem der Ansprüche 1 bis 5, **dadurch gekennzeichnet, daß** nach einer bestimmten Bereitschaftszeit, wenn in der Bereitschaftslage des Haltegriffs (1) dessen Zugansteuerung nicht betätigt wird, das Antriebsmittel (8) für eine Rückverlagerung in die Nichtgebrauchslage (5) selbsttätig angesteuert wird.

7. Haltegriff nach einem der Ansprüche 1 bis 6, **dadurch gekennzeichnet, daß** das wenigstens eine Antriebsmittel (8) aus wenigstens einem elektrischen und/oder pneumatischen und/oder hydraulischen Antriebsmotor besteht.

8. Haltegriff nach Anspruch 7, **dadurch gekennzeichnet, daß** die Tippansteuerung und/oder die Zugansteuerung für den Antriebsmotor (8) als Taster oder Schalter ausgebildet ist.

9. Haltegriff nach einem der Ansprüche 1 bis 6, **dadurch gekennzeichnet, daß** das wenigstens eine Antriebsmittel ein durch mehrere Federn, insbesondere durch eine Ausfahrfeder und eine Einfahrfeder gebildeter Federantrieb ist, dessen Steuerung einerseits in der Nichtgebrauchslage (5) durch eine Rastelemente enthaltende Tippmechanik und andererseits in der Bereitschaftslage/Gebrauchslage (11, 13) durch eine Rastelemente enthaltende Zugmechanik erfolgt, wobei die bei jeder Betätigung erforderliche Energieaufladung und Spannung des Federantriebs durch die Zugbewegung des Griffbenutzers über die Zugmechanik erfolgt.

10. Haltegriff nach einem der Ansprüche 1 bis 9, **dadurch gekennzeichnet, daß** der Haltegriff als Dachhaltegriff (1) in einem Formhimmel (2) eines Kraftfahrzeugs integriert ist.

## Claims

1. Hand grip (1) for the interior of a vehicle, in particular roof hand grip, which can be shifted from an inoperative position (5), which is recessed in a receiving opening (6) in a wall part and in which the receiving opening (6) is closed flush with the edge region of the receiving opening (6) by a visible region (7) of the hand grip (1), into an operative position (13) protruding from the wall part, by at least one driving means (8), and can be shifted back from the operative position (13) into the inoperative position (5), it being possible, by lightly touching the visible region (7) of the hand grip (1) in its inoperative position (5), to activate a touch-contact activating means which is coupled to the at least one driving means (8) in such a manner that the latter shifts the hand grip (1) from the recessed inoperative position (5) into a ready position (11) permitting the hand grip (1) to be grasped, **characterized in that** after the hand grip (1) is grasped in its ready position (11) by a user of the grip, the user exerts a tensible force causing the hand grip (1) to be shifted further into its final supporting and operative position (13), with it thereby being possible to activate a pull-type activating means which is coupled to the at least one driving means (8) in such a manner that the latter shifts the hand grip (1) back again into the recessed inoperative position (5).

2. Hand grip according to Claim 1, **characterized in that** the hand grip (1) is a bracket-type grip which can be displaced with its bracket legs (3, 4) linearly along associated guides (15, 16) fitted in the wall part (2).

3. Hand grip according to Claim 1 or Claim 2, **characterized in that** damping elements connected to the hand grip or to the driving means (8) are provided for damped movements of the hand grip (1).

4. Hand grip according to one of Claims 1 to 3, **characterized in that** the restoring force which can be applied by the at least one driving means (8) is small in comparison to a tensile force which can be applied by a user of the grip.

5. Hand grip according to one of Claims 1 to 4, **characterized in that** the activation of the at least one driving means (8) for resetting by the pull-type activating means for the purpose of shifting back the hand grip (1) takes place with a time delay.

6. Hand grip according to one of Claims 1 to 5, **characterized in that** after a certain ready time if, in the ready position of the hand grip (1), the pull-type activating means thereof is not actuated, the driving means (8) is automatically actuated for shifting it back into the inoperative position (5).

7. Hand grip according to one of Claims 1 to 6, **characterized in that** the at least one driving means (8) comprises at least one electric and/or pneumatic and/or hydraulic driving motor.

8. Hand grip according to Claim 7, **characterized in that** the touch-contact activating means and/or the pull-type activating means for the driving motor (8) is/are designed as a push-button key or switch.

9. Hand grip according to one of Claims 1 to 6, **characterized in that** the at least one driving means is a spring drive which is formed by a plurality of springs, in particular by an extension spring and a retraction spring and the control of which, on the one hand, takes place in the inoperative position (5) by means of a touch-contact mechanism containing latching elements and, on the other hand, takes place in the ready position/operative position (11, 13) by means of a pull-type mechanism containing latching means, the energy charging and tensioning of the spring drive required for each actuation being brought about by the pulling movement of the user of the grip via the pull-type mechanism.

10. Hand grip according to one of Claims 1 to 9, **characterized in that** the hand grip is integrated as a roof hand grip (1) in a shaped roof (2) of a motor vehicle.

## Revendications

1. Poignée de maintien (1) pour l'habitacle d'un véhicule, en particulier poignée de maintien fixée au toit, qui peut être déplacée d'une position de non utilisation (5) enfoncée dans une ouverture de réception (6) d'une partie de la paroi, dans laquelle l'ouverture de réception (6) est fermée par une partie visible (7) de la poignée de maintien (1) en affleurement avec la partie de bord de l'ouverture de réception (6), dans une position d'utilisation (13) dépassant de la partie de la paroi, par au moins un moyen d'entraînement (8), et qui peut être remise de la position d'utilisation (13) dans la position de non utilisation (5),
dans laquelle,
par effleurement de la région visible (7) de la poignée de maintien (1) dans sa position de non utilisation (5), une commande par effleurement est activée, laquelle est accouplée à l'au moins un moyen d'entraînement (8) de telle sorte que celui-ci déplace la poignée de maintien (1) de la position de non utilisation enfoncée (5) dans une position de disponibilité (11) permettant de saisir la poignée de maintien (1), **caractérisée en ce que**, après la saisie de la poignée de maintien (1) dans sa position de disponibilité (11) par un utilisateur de la poignée, une traction est exercée par ce dernier, sous l'effet de laquelle la poignée de maintien (1) est déplacée davantage dans sa position d'utilisation et de support finale (13), une commande de traction étant de ce fait activable, laquelle est accouplée à l'au moins un moyen d'entraînement (8) de telle sorte que celui-ci déplace à nouveau la poignée de maintien (1) en arrière dans la position de non utilisation enfoncée (5).

2. Poignée de maintien selon la revendication 1, **caractérisée en ce que** la poignée de maintien (1) est une poignée en arceau qui est déplaçable linéairement avec ses deux branches d'arceau (3, 4) le long de guides (15, 16) associés, montés dans la partie de la paroi (2).

3. Poignée de maintien selon la revendication 1 ou la revendication 2, **caractérisée en ce que** l'on prévoit des éléments d'amortissement associés à la poignée de maintien (1) ou aux moyens d'entraînement (8), pour assurer des mouvements amortis de la poignée de maintien (1).

4. Poignée de maintien selon l'une quelconque des revendications 1 à 3, **caractérisée en ce que** la force de rappel applicable par l'au moins un moyen d'entraînement (8) est petite par rapport à une force de traction applicable par un utilisateur de la poignée.

5. Poignée de maintien selon l'une quelconque des revendications 1 à 4, **caractérisée en ce que** l'activation de l'au moins un moyen d'entraînement (8) pour le rappel s'effectue par la commande de traction pour un déplacement vers l'arrière de la poignée de maintien (1).

6. Poignée de maintien selon l'une quelconque des revendications 1 à 5, **caractérisée en ce qu'**après un certain temps de disponibilité, si, dans la position de disponibilité de la poignée de maintien (1), sa commande de traction n'est pas actionnée, le moyen d'entraînement (8) est commandé en vue d'un déplacement automatique vers l'arrière dans la position de non utilisation (5).

7. Poignée de maintien selon l'une quelconque des revendications 1 à 6, **caractérisée en ce que** l'au moins un moyen d'entraînement (8) se compose d'au moins un moteur d'entraînement électrique et/ou pneumatique et/ou hydraulique.

8. Poignée de maintien selon la revendication 7, **caractérisée en ce que** la commande par effleurement et/ou la commande de traction pour le moteur d'entraînement (8) est réalisée sous forme de bouton ou de commutateur.

9. Poignée de maintien selon l'une quelconque des revendications 1 à 6, **caractérisée en ce que** l'au moins un moyen d'entraînement est une commande à ressort formée par plusieurs ressorts, en particulier par un ressort de sortie et un ressort de rentrée, dont la commande s'effectue d'une part dans la position de non utilisation (5) par un mécanisme par effleurement contenant des éléments de cliquet et d'autre part dans la position de disponibilité /position d'utilisation (11, 13), par un mécanisme de traction contenant des éléments de cliquet, la charge énergétique et la tension de l'entraînement par ressort nécessaires pour chaque actionnement s'effectuant par le mouvement de traction de l'utilisation de la poignée par le biais du mécanisme de traction.

10. Poignée de maintien selon l'une quelconque des revendications 1 à 9, **caractérisée en ce que** la poignée de maintien est intégrée sous forme de poignée de maintien fixée au toit (1), dans un plafond moulé (2) d'un véhicule automobile.
